# EUROPÄISCHE PATENTSCHRIFT

(11) **EP 3 871 943 B1**
(45) Veröffentlichungstag und Bekanntmachung des Hinweises auf die Patenterteilung: **06.08.2025**
(21) Anmeldenummer: 21153492.0
(22) Anmeldetag: 26.01.2021
(51) Int. Cl.: B61L 27/40, B61L 15/00, G01G 19/04

(54) **VERFAHREN ZUR ERMITTLUNG DER BELEGUNG EINES WAGENS EINES SCHIENENFAHRZEUGS**
METHOD FOR DETERMINING THE OCCUPANCY OF A CAR OF A RAILWAY VEHICLE
PROCÉDÉ DE DÉTERMINATION DE L'OCCUPATION D'UNE VOITURE D'UN VÉHICULE FERROVIAIRE

(30) Priorität: 28.02.2020 DE 102020105326
(43) Veröffentlichungstag der Anmeldung: 01.09.2021
(73) Patentinhaber: Trelleborg Antivibration Solutions Germany GmbH, 16727 Velten (DE)
(72) Erfinder: Zenker, Patrick, 13347 Berlin (DE)
(74) Vertreter: Reiser & Partner Patentanwälte mbB

(56) Entgegenhaltungen:
- JP-A- H02 133 278
- US-B1- 6 441 324

## Beschreibung

Die Erfindung betrifft ein Verfahren zur Ermittlung der Belegung eines Wagens eines Schienenfahrzeugs.

Aus dem Stand der Technik ist es bekannt, statische und dynamische Lasten an schwingungstechnischen Bauteilen zu erfassen. Eine derartige Erfassung erfolgt beispielsweise bei Schienenfahrzeugen. Aktuell werden dazu jedoch komplexe Messbauten benötigt. So wird eine Kraftmessung zumeist über indirekte Messverfahren vorgenommen, beispielsweise mittels Dehnmessstreifen an kalibrierten Metallkomponenten oder über eine Federwegmessung mittels Seilzug-Potentiometern an Federelementen. Aufgrund des begrenzten Bauraums ist eine Wegmessung an mehreren Achsen nur eingeschränkt möglich.

Das Dokument JP H02 133 278 A offenbart eine Vorrichtung zur Ermittlung der Belegung eines Schienenfahrzeugs mittels Lastsensoren.

Die Erfassung dynamischer Federwege kann auch mittels Beschleunigungsmessung erfolgen. Hierbei ist jedoch nachteilig, dass diese frequenzbereichsabhängig verhältnismäßig ungenau ist und Wegänderungen mit kleiner Dynamik derzeit nicht erfasst werden können.

Weitere bekannte Sensoranordnungen basieren auf dem Tauchankerprinzip, welches mit Einschränkungen der Messung hochdynamischer Lasten einhergeht. Des Weiteren erfassen diese Sensoren lediglich Verformungen in einer Richtung, was bedeutet, dass für jede weitere Richtung ein weiterer Sensor erforderlich ist.

Der Erfindung liegt die Aufgabe zugrunde, ein System mit einem schwingungstechnischen Bauteil bereitzustellen, welches die Erfassung statischer und dynamischer Bewegungen, beziehungsweise Lasten ermöglicht, welche an dem schwingungstechnischen Bauteil angreifen.

Diese Aufgabe wird mit den Merkmalen von Anspruch 1 gelöst. Auf vorteilhafte Ausgestaltungen nehmen die Unteransprüche Bezug.

Ein beispielhaftes schwingungstechnische Bauteil umfasst zumindest ein Lagerelement, ein Federelement und eine Sensoranordnung, wobei die Sensoranordnung ausgebildet ist, Relativbewegungen von Federelement und/oder Lagerelement zu erfassen, wobei die Sensoranordnung ein magnetisches Messprinzip aufweist. Dabei ist die Sensoranordnung eingerichtet, Relativbewegungen, bzw. Verformungen in allen drei Raumrichtungen zu erfassen.

Die Sensoranordnung kann zumindest eine Magnetfeldquelle und einen Magnetsensor umfassen, welche beabstandet zueinander im Bauteil angeordnet sind.

Die Magnetfeldquelle ist dabei vorzugsweise ein Dauermagnet, beispielsweise ein ferritischer Magnet oder ein Neodym-Magnet. Ferritische Magnete weisen den Vorteil einer hohen Langzeitstabilität und geringer Kosten auf. Neodym-Magnete weisen demgegenüber hohe Feldstärken auf.

Die Sensoranordnung kann dabei zumindest eine oder mehrere Magnetfeldquellen aufweisen. Durch die Änderung der Anzahl, der Position und der Bauform der Magnetfeldquelle kann die Sensoranordnung auf den gewünschten Anwendungsbereich angepasst werden. Ebenso wie die Anzahl stellt auch die Bauform der Magnetfeldquelle dabei einen wesentlichen Parameter zur Anpassung der Sensoranordnung dar. Die Eigenschaft der Magnetfeldquelle wird insgesamt beeinflusst durch dessen Geometrie, den Werkstoff, die Anzahl und die Polarisationsrichtung der Magnetfeldquelle.

Neben der Magnetfeldquelle kann die Sensoranordnung ferner eine Einrichtung zur Verformung und/oder Leitung des Magnetfeldes umfassen. Diese Einrichtung stellt ein passives Bauteil dar, welches die Eigenschaften des Magnetfeldes beeinflusst und beispielsweise die Sensitivität der Sensoranordnung oder die erfasste Auslenkung der Magnetfeldquelle beeinflusst. Darunter kann beispielsweise eine Einrichtung verstanden werden, welche ein elektromagnetisches Feld bündelt. Dafür ist eine Einrichtung mit weichmagnetischen Eigenschaften vorteilhaft.

Die Sensoranordnung umfasst ferner vorzugsweise einen Magnetfeldsensor zur Erfassung des von der Magnetfeldquelle emittierten Magnetfeldes. Wird die Magnetfeldquelle relativ zu dem Sensor bewegt, ändert sich das von dem Sensor erfasste Magnetfeld. Dadurch besteht ein direkter Zusammenhang zwischen der statischen beziehungsweise dynamischen Auslenkung des schwingungstechnischen Bauteils und der Änderung des von dem Sensor erfassten Magnetfeldes. Insofern ermöglicht die Sensoranordnung eine direkte Erfassung der statischen und dynamischen Belastung des schwingungstechnischen Bauteils. Vorzugsweise ist der Magnetfeldsensor als Hall-Sensor ausgebildet.

Der Magnetfeldsensor ist vorzugsweise dem Federelement zugeordnet und die Magnetfeldquelle ist vorzugsweise dem Lagerelement zugeordnet. Dabei kann der Magnetfeldsensor in das Federelement eingebettet sein.

Es ist denkbar, dass die Sensoranordnung mehrere Magnetfeldsensoren umfasst, welche so angeordnet sind, dass eine Bewegung des schwingungstechnischen Bauteils, bzw. eine Bewegung einer Komponente des schwingungstechnischen Bauteils in allen drei Raumrichtungen möglich ist. Ebenso kann ein Verkippen des schwingungstechnischen Bauteils, bzw. eine Komponente des schwingungstechnischen Bauteils in allen drei Raumrichtungen erfasst werden. Dies ermöglicht ein vollständiges Monitoring sämtlicher Bewegungen des schwingungstechnischen Bauteils.

Ein Vorteil der auf magnetischem Messprinzip beruhenden Sensoranordnung ist eine berührungslos erfolgende Absolutweg- und Winkelmessung. Es werden Verformungen in allen drei Raumrichtungen erfasst, wobei die Sensoranordnung die Eigenschaften des schwingungstechnischen Bauteils nicht beeinträchtigt.

Die Magnetfeldquelle ist vorzugsweise so ausgebildet, dass diese gleichbleibende magnetische Eigenschaften aufweist. In diesem Fall ist es möglich, den Abstand des Magnetfeldsensors relativ zu der Magnetfeldquelle zu bestimmen und dadurch die Absolutbewegungen des schwingungstechnischen Bauteils zu bestimmen.

Schwingungstechnische Bauteile umfassen häufig Federelemente aus gummielastischen Werkstoffen. Diese verändern ihre Federungscharakteristiken in Abhängigkeit der Temperatur. Des Weiteren weisen einige gummielastische Werkstoffe auch eine Änderung der Federungscharakteristik in Abhängigkeit der Umgebungsfeuchtigkeit auf. Um die Änderung der Federungscharakteristik in Abhängigkeit der Temperatur und der Feuchtigkeit bestimmen zu können, ist es vorteilhaft, wenn die Sensoranordnung einen Temperatursensor und/oder einen Feuchtigkeitssensor aufweist. Es kann ferner ein Sensor zur Erfassung der Temperatur der Sensoranordnung vorgesehen sein, um so eine Kompensation der Temperaturabhängigkeit des Magnetfeldes vornehmen zu können.

Die Sensoranordnung kann einen dreiachsialen Beschleunigungssensor, ein Mikrofon, ein GPS-Sensor und/oder ein Gyroskop aufweisen. Das Mikrofon ermöglicht das Aufzeichnen von Tonsignalen, welches insbesondere bei der späteren Auswertung, beispielsweise im Rahmen einer Schadensbeurteilung genauere Analysen des Schadenshergangs ermöglicht. Der GPS-Sensor und das Gyroskop verbessern die geografische Zuordnung der übrigen von der Sensoranordnung erfassten Daten. Dies ist insbesondere dann vorteilhaft, wenn von der Sensoranordnung Schäden an stationären Einrichtungen wie Schienen festgestellt werden.

Die Erfassung dynamischer Vorgänge verbessert sich, wenn die Sensoranordnung ferner einen Beschleunigungssensor aufweist.

Die Sensoranordnung kann ein Funkmodul umfassen. Dies ermöglicht die Fernübertragung der von der Sensoranordnung erfassten Daten. So ist es beispielsweise möglich, ein Echtzeit-Monitoring des schwingungstechnischen Bauteils durchzuführen.

Das Funkmodul überträgt die Daten drahtlos an Empfangsgeräte, beispielsweise eine Zentralelektronik oder an mobile Diagnosegeräte. Es ist aber auch denkbar, dass das schwingungstechnische Bauteil bzw. die Sensoranordnung einen Konnektor für eine Kabelverbindung aufweist.

Das Funkmodul kann eingerichtet sein, Daten über ein Funkprotokoll zu senden. Das Senden kann beispielsweise lokal mittels WLAN, oder als Fernübertragung über ein Funknetz, wie beispielsweise GSM, UMTS oder LTE oder einem drahtlosen Netzstandard wie ZigBee erfolgen.

Die Sensoranordnung kann eine Steuereinheit mit einer Speichereinrichtung umfassen. Die Speichereinrichtung speichert die von der Sensoranordnung erfassten Daten. Durch eine geeignete Schnittstelle können die Daten dann zu einem frei wählbaren Zeitpunkt ausgelesen werden. Ein Auslesen der Daten kann beispielsweise im Rahmen einer Wartung erfolgen. Die Speichereinrichtung kann alternativ und zusätzlich zu dem Funkmodul vorgesehen sein. Des Weiteren können in der Speichereinheit weitere Daten hinterlegt sein, beispielsweise das Leergewicht des Wagens, welchem das Bauteil zugeordnet ist.

Schwingungstechnische Bauteile von Maschinenfahrzeugen unterliegen starken dynamischen und statischen Wechselwirkungen. Des Weiteren weisen schwingungstechnische Bauteile von Schienenfahrzeugen eine lange Gebrauchsdauer auf, gleichzeitig unterliegen die schwingungstechnischen Bauteile einem Dauerbetrieb. Ein besonders vorteilhafter Einsatz des schwingungstechnischen Bauteils ergibt sich daher bei Ausbildung des schwingungstechnischen Bauteils als Primärfeder eines Schienenfahrzeugs. Diese Ausgestaltung ermöglicht ein Monitoring der Primärfeder und darüber hinaus ein Monitoring der angrenzenden Bauteile. Dies kann beispielsweise der der Primärfeder zugeordnete Primärdämpfer sein. Aber auch die Schnittstelle Rad-Zug kann überwacht werden. Bei entsprechender Ausgestaltung der Sensoranordnung ist es beispielsweise möglich, Flachstellen an Radsätzen oder Schäden an Schienen zu ermitteln. Insbesondere um Schäden an Schienen feststellen zu können, ist es vorteilhaft, wenn die Sensoranordnung ferner ein GPS-Modul aufweist. Dieses ermöglicht eine geografische Zuordnung der erfassten Messwerte. Dadurch können Schäden an Schienen auch zu einem späteren Zeitpunkt genau lokalisiert werden.

Der Sensoranordnung kann eine Einrichtung zur Bereitstellung elektrischer Energie zugeordnet sein. Die Einrichtung stellt die für die Sensoranordnung benötigte elektrische Energie bereit. Elektrische Energie kann beispielsweise für die Funktion des Magnetfeldsensors, für eine Auswerteelektronik, das Funkmodul und für die Speichereinrichtung benötigt werden. In einer einfachen Ausgestaltung stellt die Einrichtung eine Verbindung zu dem Bordnetz des Schienenfahrzeugs her.

Nach einer ersten Ausgestaltung ist die Einrichtung in Form eines Akkumulators ausgebildet. Akkumulatoren sind kostengünstig erhältlich. Nach einer weiteren Ausgestaltung ist die Einrichtung ausgebildet, elektrische Energie durch Umwandlung der Umgebungsenergie zu gewinnen. Dazu weist die Einrichtung Generatoren, beispielsweise in Form von Mikrogeneratoren auf, welche Umgebungsenergie, wie beispielsweise Vibrationsenergie, Stoßenergie oder Wärmeenergie in elektrische Energie umwandeln. Der Vorteil gegenüber einem Akkumulator liegt darin, dass die nahezu unbegrenzt vorhandene Umgebungsenergie zur Gewinnung von elektrischer Energie verwendet wird. Daraus ergibt sich eine Sensoranordnung mit einer besonders langen Gebrauchsdauer.

Die Steuereinheit kann eine Auswerteeinheit aufweisen, welche die durch die Sensoranordnung erfassten Daten erfasst und dem Funkmodul und/oder der Speichereinrichtung zuführt. Die Auswerteeinheit kann ferner so ausgebildet sein, dass dort eine erste Verarbeitung der erfassten Daten erfolgt. Beispielsweise können die erfassten Daten in ein busfähiges Protokoll überführt werden.

Mehrere schwingungstechnische Bauteile können zu einer Einheit zusammengefasst sein, wobei die von der Sensoreinheit jedes schwingungstechnischen Bauteils erfassten Daten in einer Steuereinheit zusammengeführt werden. Eine derartige Einheit wird beispielsweise durch das Drehgestell eines Schienenfahrzeugs gebildet. Das Drehgestell weist mehrere schwingungstechnische Bauteile, beispielsweise mehrere Primärfedern auf. Dabei kann dem Drehgestell eine Steuereinheit zugeordnet sein, welche die von den Sensoranordnungen aller an dem Drehgestell angeordneten Primärfedern erfassten Daten zentral erfasst. Die Datenübertragung von den schwingungstechnischen Bauteilen zu der Steuereinheit kann dabei drahtlos über das Funkmodul oder über ein kabelgebundenes Netzwerk erfolgen. Die Steuereinheit kann eine Auswerteeinheit und eine Speichereinheit und ein Funkmodul aufweisen. Durch die Auswerteeinheit können die erfassten Daten vorverarbeitet werden. Durch die Auswertung der Daten aller schwingungstechnischen Einrichtungen kann eine Überwachung des Gesamtsystems erfolgen. Beispielsweise ist es möglich, die Funktion des Drehgestells und der dazu gehörigen einzelnen Komponenten zu überwachen.

Die von der Sensoranordnung oder der Steuereinheit erfassten Daten können mit einem Zeitstempel versehen werden. Dabei erfolgt eine Synchronisierung der Messsignale mittels einer Echtzeituhr oder einem Zeitsignal, welches durch das Fahrzeug bereitgestellt wird.

Die Sensoranordnung kann Einrichtungen zur Optimierung des Energiebedarfs aufweisen. Dadurch kann, insbesondere bei Verwendung von Akkumulatoren, die Betriebsdauer der Sensoranordnung verlängert werden. Dies kann beispielsweise durch gezieltes Abschalten und/oder das Überführen der Sensoranordnung in den Bereitschaftsbetrieb oder in den Schein-Aus-Modus erfolgen. Die Einrichtung kann ferner schaltende Bauelemente aufweisen, welche eine vollständige Trennung der Sensoranordnung von dem Akkumulator ermöglichen.

Die Sensoranordnung ermöglicht eine Überwachung des schwingungstechnischen Bauteils. Sind mehrere schwingungstechnische Bauteile zu einer Einheit zusammengefasst, ist darüber hinaus eine Überwachung der Einheit möglich. Schwingungstechnische Bauteile sind bereits vielfältig und seit vielen Jahren im Einsatz. Daher sind bereits Schädigungsmechanismen bekannt. Durch Kenntnis der tatsächlichen Verformungen des schwingungstechnischen Bauteils, welche durch die Sensoranordnung erfasst werden und durch Kenntnis der Schädigungsmechanismen können Beurteilungen des einzelnen schwingungstechnischen Bauteils und der gesamten überwachten Einheit in Echtzeit erfolgen. Dadurch kann beispielsweise eine Schadensakkumulation des Bauteils vorgenommen werden und es ist möglich, die Restlebensdauer zu berechnen. Ebenso kann eine Beurteilung der Einheit vorgenommen werden, welcher die schwingungstechnischen Bauteile zugeordnet sind. Dies kann beispielsweise das Drehgestell eines Schienenfahrzeugs sein.

Der Beschleunigungssensor ermöglicht das Erfassen periodischer Vorgänge, welche beispielsweise durch Radlager oder Getriebe hervorgerufen werden.

Zwischen der Magnetfeldquelle und dem Magnetfeldsensor kann sich Luft befinden. Dies kann beispielsweise in Primärfedern oder in Luftfedern der Fall sein. Des Weiteren ist denkbar, dass sich zwischen der Magnetfeldquelle und dem Magnetfeldsensor das Federelement befindet. Dies ist beispielsweise bei Schichtfedern der Fall. Ferner ist denkbar, dass sich zwischen der Magnetfeldquelle und dem Magnetfeldsensor ein Fluid befindet. Dies ist beispielsweise bei Hydrolagern der Fall.

Bei einem erfindungsgemäßen Verfahren zur Ermittlung der Belegung eines Wagens eines Schienenfahrzeugs wird mittels einer Sensoranordnung das Gewicht des Wagens bestimmt, wobei das durch die Sensoranordnung erfasste Gewicht an eine Steuereinheit geleitet wird, wobei in der Steuereinheit das Leergewicht des Wagens hinterlegt ist, wobei die Belegung des Wagens durch Vergleich des Leergewichtes des Wagens mit dem durch die Sensoranordnung erfassten Gewicht des Wagens ermittelt wird.

Bei diesem Verfahren ist insbesondere vorteilhaft, dass keine zusätzlichen Einrichtungen zur Erfassung der Belegung erforderlich sind. Es ist beispielsweise bekannt, zur Erfassung der Belegung Kamerasysteme einzusetzen. Diese weisen jedoch das Problem auf, dass neben der Erfassung der Belegung auch die Erfassung personenbezogener Daten möglich ist. Bei dem erfindungsgemäßen Verfahren werden keinerlei personenbezogene Daten erfasst, es wird lediglich mit den Merkmalen des Anspruchs 1 das Gesamtgewicht des Wagens ermittelt und aus dem Vergleich zum Leergewicht die Belegung ermittelt. Die Ermittlung der Belegung kann dabei anhand von statistischen Vergleichswerten, beispielsweise anhand eines Durchschnittsgewichtes eines Reisenden erfolgen. Das Verfahren ist insbesondere vorteilhaft für die Erfassung der Belegung von Reisezugwagen von Zügen des Nah- und insbesondere des Fernverkehrs.

Der Wagen kann auf Drehgestellen mit Primärfedern gelagert sein, wobei jeder Primärfeder des Wagens eine Sensoranordnung zugeordnet ist. Ein Drehgestell ist ein Laufwerk eines Schienenfahrzeuges, bei dem Radsätze in einem gegenüber dem Wagenkasten des Wagens drehbaren Rahmen gelagert werden. Die Radsätze sind über Primärfedern an den Rahmen des Drehgestells angebunden. Dabei können je Radsatz mehrere Primärfedern vorgesehen sein. Dadurch kann das Gesamtgewicht des Wagen mit großer Genauigkeit bestimmt werden.

Alternativ ist auch denkbar, die Sekundärfedern der Drehgestelle mit Sensoranordnungen auszurüsten. Die Sekundärfedern sind Bestandteil des Drehgestells und zwischen Rahmen und Drehpfanne angeordnet. Prinzipiell ist dabei ausreichend, wenn die Sensoranordnungen den Primärfedern oder Sekundärfedern zugeordnet sind. Die Sensoranordnungen erfassen die Bewegung der Primärfeder oder der Sekundärfeder, dies kann auch mit Sensoranordnungen erfolgen, die benachbart zu den Primärfedern oder Sekundärfedern angeordnet sind. Die Sensoranordnungen können aber auch in die Primärfeder oder in die Sekundärfeder integriert und eine Baueinheit bilden.

Bei einem erfindungsgemäßen Verfahren zur Ermittlung der Belegung eines Wagens eines Schienenfahrzeugs wird in einem ersten Schritt mit einem Verfahren wie zuvor beschrieben das Gewicht jedes Wagens bestimmt, wobei die Belegung jedes Wagens ermittelt wird.

Belegung kann auf einer Anzeigeeinrichtung angezeigt werden. Die Anzeigeeinrichtung ermöglicht die Steuerung von Reisenden. Es kann über die Anzeigeeinrichtung signalisiert werden, in welchem Wagen Plätze verfügbar sind und auch in welcher Anzahl Plätze verfügbar sind. Beispielsweise kann durch Anzeigen von Wagennummern oder Pfeilen signalisiert werden, in welchem Wagen Plätze verfügbar sind. Die Anzeige kann durch ständige Erfassung der Belegung in Echtzeit aktualisiert werden.

Eine Anordnung zur Ermittlung der Belegung eines Wagens eines Schienenfahrzeugs umfasst ein schwingungstechnisches Bauteil mit einem Lagerelement, einem Federelement, einer Sensoranordnung und einer Steuereinheit, wobei die Sensoranordnung ausgebildet ist, Relativbewegungen von Federelement und/oder Lagerelement zu erfassen, wobei in der Steuereinheit anhand der durch die Sensoranordnung erfasste Relativbewegung ein Gewicht ermittelbar ist durch Vergleich mit dem in der Steuereinheit gespeicherten Leergewicht die Belegung des Wagens ermittelbar ist.

Ein Informationssystem zur Fahrgaststeuerung eines Schienenfahrzeugs umfasst eine Anordnung und eine Anzeigeeinrichtung, welche die Belegung der Wagen des Schienenfahrzeugs anzeigt. Die Anzeigeeinrichtung kann einem Bahnsteig, zumindest einem Wagen und/oder einem Mobilgerät zugeordnet sein. Eine auf dem Bahnsteig positionierte Anzeigeeinrichtung ist besonders vorteilhaft für die Lenkung der Passagierströme. Beispielsweise kann durch Anzeigen von Pfeilsymbolen die Richtung zu Wagen angezeigt werden, in welchen Plätze verfügbar sind. Eine an dem Wagen positionierte Anzeigeeinrichtung ist vorzugsweise in der Nähe der Türen angebracht, so dass die Reisenden vor dem Einsteigen erkennen können, ob in dem Wagen noch Plätze verfügbar sind. Die Anzeige kann in Echtzeit aktualisiert werden. Ebenso kann die Anzeigeeinrichtung einer Anwendung eines Mobilgerätes zugeordnet sein. Beispielsweise kann auf dem Mobilgerät die Wagennummer der Wagen angezeigt werden, in welchen noch Plätze verfügbar sind.

Ein Ausführungsbeispiel eines schwingungstechnischen Bauteils wird nachfolgend anhand der Figur näher erläutert. Die Figur zeigt schematisch:

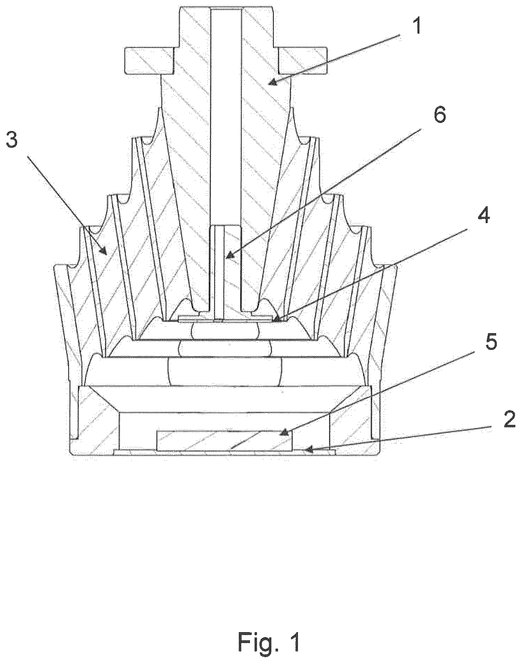

Fig. 1 im Schnitt eine Primärfeder.

Figur 1 zeigt eine Primärfeder eines Schienenfahrzeugs. Diese bildet ein schwingungstechnisches Bauteil 1. Das schwingungstechnische Bauteil 1 umfasst ein Lagerelement 2 aus metallischem Werkstoff, ein Federelement 3 aus gummielastischem Werkstoff und eine Sensoranordnung 4. Die Sensoranordnung 4 ist ausgebildet, Relativbewegungen von Federelement 3 und Lagerelement 2 zu erfassen.

Die Sensoranordnung 4 weist ein magnetisches Messprinzip auf. Dazu weist die Sensoranordnung 4 eine Magnetfeldquelle 5 und einen Magnetfeldsensor 6 auf. Diese sind beabstandet voneinander im schwingungstechnischen Bauteil 1 angeordnet. Der Magnetfeldsensor 6 ist dem Federelement 3 zugeordnet und die Magnetfeldquelle 5 ist dem Lagerelement 2 zugeordnet. Bei der vorliegenden Ausgestaltung ist der Magnetfeldsensor 6 in das Federelement 3 eingebettet.

Um Umgebungseinflüsse kompensieren zu können, umfasst die Sensoranordnung 4 ferner einen Temperatursensor, einen Feuchtigkeitssensor und einen Beschleunigungssensor. Die Sensoranordnung 4 weist ferner ein Mikrofon zur Aufzeichnung von Umgebungsgeräuschen auf. Das gummielastische Verhalten des Federelementes 3 ist in Abhängigkeit von der Temperatur und der umgebenden Feuchtigkeit. Durch den Temperatursensor und den Feuchtigkeitssensor können diese Einflüsse kompensiert werden.

Die Sensoranordnung 4 umfasst ein Funkmodul und eine Speichereinrichtung. Das Funkmodul ermöglicht eine Funkübertragung der von der Sensoranordnung 4 erfassten Daten. Die Speichereinrichtung speichert die von der Sensoranordnung 4 erfassten Daten.

Eine Anordnung umfasst mehrere schwingungstechnische Bauteile. Die schwingungstechnischen Bauteile wiederum umfassen zumindest ein Lagerelement, ein Federelement und eine Sensoranordnung, wobei die Sensoranordnung ausgebildet ist, Relativbewegungen von Federelement und/oder Lagerelement zu erfassen. Die von den Sensoranordnungen der schwingungstechnischen Bauteile erfassten Messdaten werden in der Steuereinheit gespeichert und/oder verarbeitet. Dazu sind die Sensoranordnungen mit einer kabelgebundenen Datenleitung mit der Steuereinheit verbunden. Alternativ ist denkbar, dass eine Übertragung der von der von der Sensoranordnung erfassten Daten zu der Steuereinheit kabellos über eine Funkverbindung erfolgt.

Bei einer kabelgebundenen Verbindung zwischen Steuereinheit und schwingungstechnischem Bauteil kann eine Energieversorgung der Sensoranordnung über die Steuereinheit erfolgen.

Die Steuereinheit kann einen Speicher umfassen, welcher die von den Sensoranordnungen erfassten Daten speichert. Des Weiteren kann die Steuereinheit mit einer Einrichtung versehen sein, mittels der die von den Sensoranordnungen erfassten Daten weitergegeben bzw. ausgelesen werden können. Dazu kann die Steuereinheit ein Funkmodul aufweisen. Des Weiteren kann die Steuereinheit eine Schnittstelle zum Anschluss einer kabelgebundenen Ausleseeinheit aufweisen.

Mehrere schwingungstechnische Bauteile können zu einer schwingungstechnischen Einheit zusammengefasst sein, wobei je schwingungstechnischer Einheit je eine Steuereinheit vorgesehen ist. Bei dieser Ausgestaltung kann eine Anordnung mehrere schwingungstechnische Bauteile und mehrere Steuereinheiten aufweisen. Die schwingungstechnischen Bauteile sind dabei vorzugsweise einer schwingungstechnischen Einheit, bzw. einer Bauteilgruppe zugeordnet. Dabei können die Steuereinheiten miteinander in Verbindung stehen.

Eine Anordnung bildet beispielsweise ein Schienenfahrzeug. Das Schienenfahrzeug weist mehrere Drehgestelle und wiederum jedes Drehgestell weist mehrere Radsätze auf. Jeder Radsatz weist mehrere schwingungstechnische Bauteile auf, wobei die schwingungstechnischen Bauteile zumindest teilweise mit einer Sensoranordnung versehen sind. Beispielsweise können die Primärfedern eines Drehgestells mit einer Sensorik ausgerüstet sein.

Die von den in den schwingungstechnischen Bauteilen angeordneten Sensoranordnungen erfassten Daten werden jeweils an eine Steuereinheit übermittelt, wobei je Drehgestell eine Steuereinheit vorgesehen ist. Das Schienenfahrzeug weist wiederum mehrere Wagen auf, wobei jeder Wagen zwei Drehgestelle aufweist. Insofern weist jeder Wagen zwei Steuereinheiten mit wiederum mehreren der Steuereinheit zugeordneten schwingungstechnischen Bauteilen auf.

## Patentansprüche

1. Verfahren zur Ermittlung der Belegung eines Wagens eines Schienenfahrzeugs, bei welchem mittels einer Sensoranordnung (4) das Gewicht des Wagens bestimmt wird, wobei das durch die Sensoranordnung (4) erfasste Gewicht an eine Steuereinheit geleitet wird, wobei in der Steuereinheit das Leergewicht des Wagens hinterlegt ist und wobei durch Vergleich des Leergewichtes mit dem ermittelten Gewicht die Belegung des Wagens ermittelt wird, **dadurch gekennzeichnet, dass** der Wagen auf Drehgestellen mit Primärfedern gelagert ist, wobei jeder Primärfeder des Wagens eine Sensoranordnung (4) zugeordnet ist.

2. Verfahren zur Belegung der Wagen eines Schienenfahrzeugs, bei welchem in einem ersten Schritt mit einem Verfahren gemäß Anspruch 1 das Gewicht jedes Wagens bestimmt wird, wobei die Belegung jedes Wagens ermittelt wird, wobei die Belegung auf einer Anzeigeeinrichtung angezeigt wird.

3. Verfahren nach Anspruch 2, **dadurch gekennzeichnet, dass** die Anzeigeeinrichtung an den Wagen und/oder dem Bahnsteig und/oder einem mobilen Gerät angezeigt wird.

## Claims

1. Method for determining the occupancy of a carriage of a rail vehicle, in which the weight of the carriage is determined by means of a sensor arrangement (4), wherein the weight detected by the sensor arrangement (4) is forwarded to a control unit, wherein the empty weight of the carriage is stored in the control unit and wherein the occupancy of the carriage is determined by comparing the empty weight to the determined weight, **characterised in that** the carriage is mounted on bogies with primary springs, wherein each primary spring of the carriage is associated with a sensor arrangement (4).

2. Method for occupying the carriages of a rail vehicle, in which in a first step, with a method according to claim 1, the weight of each carriage is determined, wherein the occupancy of each carriage is determined, wherein the occupancy is displayed on a display device.

3. Method according to claim 2, **characterised in that** the display device is displayed on the carriages and/or the platform and/or a mobile device.

## Revendications

1. Procédé pour déterminer l'occupation d'un wagon d'un véhicule ferroviaire, dans lequel le poids du wagon est déterminé au moyen d'un ensemble de capteurs (4), dans lequel le poids détecté par l'ensemble de capteurs (4) est transmis à une unité de commande, dans lequel le poids à vide du wagon est enregistré dans l'unité de commande et dans lequel l'occupation du wagon est déterminée en comparant le poids à vide avec le poids déterminé, **caractérisé en ce que** le wagon est monté sur des bogies équipés de ressorts primaires, dans lequel un ensemble de capteurs (4) est associé à chaque ressort primaire du wagon.

2. Procédé pour occuper les wagons d'un véhicule ferroviaire, dans lequel, dans une première étape, avec un procédé selon la revendication 1, le poids de chaque wagon est déterminé, dans lequel l'occupation de chaque wagon est déterminée, dans lequel l'occupation est affichée sur un dispositif d'affichage.

3. Procédé selon la revendication 2, **caractérisé en ce que** le dispositif d'affichage est affiché au niveau des wagons et/ou du quai de gare et/ou d'un appareil mobile.
